# EUROPEAN PATENT APPLICATION

(11) **EP 2 355 131 A1**
(43) Date of publication of application: **10.08.2011**
(21) Application number: 10382022.1
(22) Date of filing: 04.02.2010
(51) Int. Cl.: H01J 61/96, F21S 8/00, H05B 35/00, H05B 39/04

(54) **Compact fluorescent lamp with light output dimmable by common dimmer**

(71) Applicant: Wilkes, Mr. Michael Edward, 88 Container Port Road Kwai Chung Hong Kong (CN)
(72) Inventor: Wilkes, Mr. Michael Edward, 88 Container Port Road Kwai Chung Hong Kong (CN)
(74) Representative: Díaz de Bustamante y Terminel, Isidro

(57) **Abstract**

COMPACT FLUORESCENT LAMP WITH LIGHT OUTPUT DIMMABLE BY COMMON DIMMER, comprising a compact fluorescent lamp (2) itself non dimmable and a second dimmable incandescent lamp (3), being both coupled to a single base (4), threaded (4a) or not (4b), forming one combined unit with power connection by said base (4), existing a control gear (5) suitable for supplying power to the fluorescent tube (6) of said compact fluorescent lamp (2) and, at the same time, detecting the control of a common or conventional tungsten dimmer which is incorporated to the installation, for which it is provided with a part (5a) intended for controlling the fluorescent tube (6) and another part (5b) with mains output or low voltage transformer for dimmable lamps.

## Description

### OBJECT OF THE INVENTION

The invention, as exposed on the wording of the present specification, relates to a compact fluorescent lamp with light output dimmable by common dimmer, providing several novel advantages and characteristics, which will be described more in detail hereinafter, which mean an improvement compared to the systems currently known in the market for the same purpose.

More particularly, the object of the invention focuses on a compact fluorescent lamp (CFL) i.e., of the type that, being fluorescent, is configured as a bulb with Standard International Lamp cap (ES, BC, etc), whose structural configuration presents the particularity of converting it into a dual lamp permitting the dimmable control of the light output thereof with a tungsten dimmer of the common or conventional type, and therefore, there is no need of dimming the fluorescent lamp itself avoiding the use of a control gear dimming the fluorescent with special circuit.

### APPLICATION FIELD OF THE INVENTION

The application field of the present invention is framed within the technical sector of the industry dedicated to the manufacture of lamps and bulbs, particularly compact fluorescent lamps.

### BACKGROUND OF THE INVENTION

As it is known, in compact fluorescent lamps or bulbs (CFL), which with the advantages in power saving of fluorescent light are configured as a bulb which may present many shapes, for example round or with spiral or straight tubes, provided with an Edison screw cap, threaded or not, normal or miniature sized, for dimming the light output thereof, need a dimmable fluorescent control gear which incorporates a special circuit, as the conventional dimming devices are not suitable for the fluorescent lamps that provided with a Standard International lamp cap, threaded or not, normal or miniature sized, are not dimmable and for dimming the light output thereof, need dimmable type dedicated special control gear to effect changes in light level in order to operate on conventional dimming devices.

It is then the object of the invention developing a new type of lamp or bulb which, being essentially a compact fluorescent lamp, has dual light provided by a complementary lamp or bulb, for permitting its dimming by a conventional dimmer which is incorporated to the installation.

### EXPLANATION OF THE INVENTION

Thus, the compact fluorescent lamp with light output dimmable by common dimmer which is proposed by the present invention, is configured as a remarkable novelty within its application filed, because, according to its implementation and in a restricted sense, the previously mentioned objectives are satisfactorily achieved, being the characterizer details which make it possible suitably gathered in the final claims accompanying the present specification.

Specifically, the invention recommends a lamp with dimmable light output comprising a conventional non dimmable compact fluorescent lamp CFL (self ballasted or remote ballasted) and a second incandescent lamp which is dimmable, being disposed so that the fluorescent lamp (non dimmable) and the second lamp (dimmable) form one combined unit with power connection by conventional existing bases threaded or not, such as for example of type E27, B22, E14, B15, R7s, etc.

It is important to note that the two mentioned lamps will not operate at the same time, but if they are connected to a conventional existing tungsten dimmer, when said dimmer is set full power (100%) to the lamp, the fluorescent will (only) illuminate. If the setting of the dimmer is then reduced, the fluorescent will extinguish (for safety and life protection) and the second lamp will illuminate being dimmable under the control of said conventional tungsten dimmer.

Thus, the lamp of the invention will provide the correct load that existing dimmers require for correct operation avoiding so the use of a control gear dimming the fluorescent with special circuit. These two types of lamp, the fluorescent and the incandescent will operate and recognize existing dimmers in any installation, being combined in a single unit which, with the advantages of a compact fluorescent lamp, will have dimmable light output.

The new compact fluorescent lamp with light output dimmable by common dimmer represents consequently an innovative structure with structural and constitutive characteristics not known so far for such purpose, reasons which, together with its practical usefulness, grant enough basis to obtain the exclusiveness privilege applied for.

### DESCRIPTION OF THE DRAWINGS

In order to complete this description and to ease a better understanding of the characteristics of the invention, we attach to the present specification, making part of the same, a set of layouts where, with an illustrative non limitative character, the following has been represented:
Figure number 1.- Shows a perspective exploded view of an example of embodiment of the compact fluorescent lamp with light output dimmable by common dimmer object of the invention, being appreciated therein the parts and elements integrating the same.
Figures numbers 2 and 3.- Show alternate examples of the lamp according to the invention, corresponding respectively to an exploded view of a lamp according to the invention with straight tube and to a view of another example of lamp according to the invention, in this case already assembled and with the incandescent lamp disposed externally to the fluorescent tube.
Figure number 4.- Shows a diagram of the connection in an example of remote ballasted compact fluorescent lamp, wherein the parts forming the lamp control gear are appreciated.

### PREFERENTIAL EMBODIMENT OF THE INVENTION

In the light of the said figures, and according to their numbering, it can be seen on them an example of preferential embodiment of the invention, which comprises the parts and elements denoted and described in detail below.

Thus, as it can be seen in said figures, the lamp (1) in question comprises a non dimmable compact fluorescent lamp (2) itself (self ballasted or remote ballasted) and a second incandescent lamp (3) which is dimmable, being both lamps (2, 3) coupled to a single base (4) of conventional type, which might be threaded (4a) or not (4b), so that they form one combined unit with power connection by said common base (4), existing inside of it a control gear (5) suitable for supplying power to the fluorescent tube (6) and, at the same time, detecting the control of a common or conventional tungsten dimmer (not represented) which is incorporated to the installation.

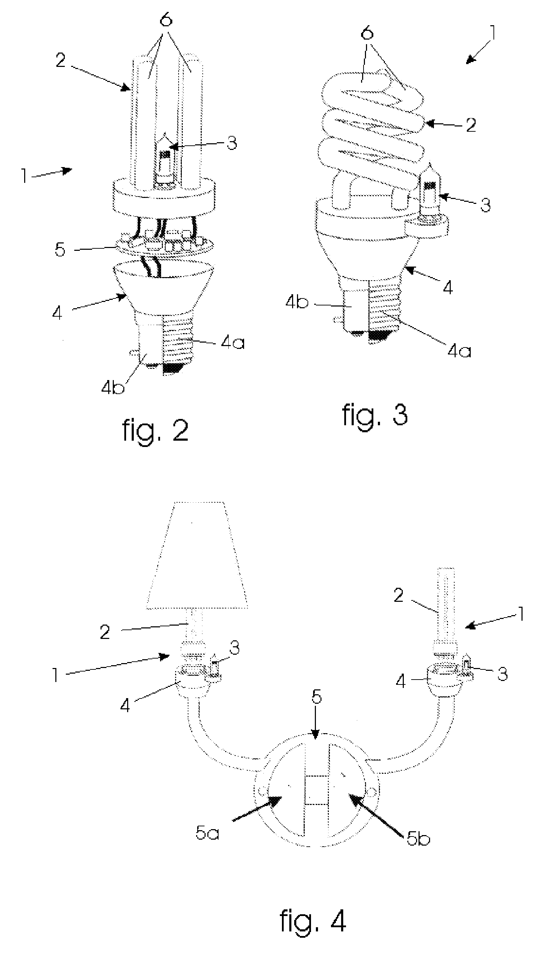

Thus, and thanks to said control gear (5) which, as shown in figure 4, is provided with a part (5a) intended for controlling the fluorescent tube (6) and another part (5b) with mains output or low voltage transformer for dimmable lamps, when said dimmer is set full power (100%) to the lamp (1), the fluorescent tube (6) of the compact fluorescent lamp (2) will illuminate and if the setting of the dimmer is reduced, said tube (6) will extinguish and the second incandescent lamp (3) will illuminate, being dimmable by controlling said dimmer.

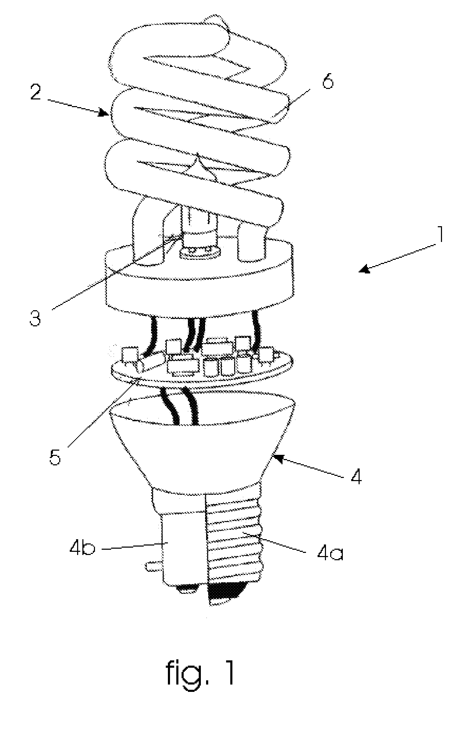

Referring to the mentioned figures 1, 2 and 3, it can be seen how the fluorescent tube (6) of the compact fluorescent lamp (2) might be both of spiral (figures 1 y 3) and straight (figure 2) configuration whereas, in turn, the second incandescent lamp (3), dimmable by the described dimmer, might be disposed in the center of the base (4) between the tube (6), in which case the tube (6) might only be spiral or straight, or might be disposed laterally to said base (4) and externally to the tube (6) of the compact fluorescent lamp (2), as shown in figure 3, in this case the tube (6) may present any configuration.

Being already described the nature of the present invention, as well as the way to put it into practice, it is not considered necessary to make an extensive description for an expert in the art understands its reach and the derived advantages, stating that, within its essentiality, it might be put in practice in other ways differing in detail from such indicated by way of example, to which the protection requested will also reach, provided that its main principle is not altered, changed or modified.

## Claims

1. COMPACT FLUORESCENT LAMP WITH LIGHT OUTPUT DIMMABLE BY COMMON DIMMER, **characterized in that** it comprises a compact fluorescent lamp (2) itself non dimmable (self ballasted or remote ballasted) and a second incandescent lamp (3) which is dimmable, being both lamps (2, 3) coupled to a single base (4) of conventional type, threaded (4a) or not (4b), so that they form one combined unit with power connection by said base (4), existing inside of it a control gear (5) suitable for supplying power to the fluorescent tube (6) of said compact fluorescent lamp (2) and, at the same time, detecting the control of a common or conventional tungsten dimmer which is incorporated to the installation.

2. COMPACT FLUORESCENT LAMP WITH LIGHT OUTPUT DIMMABLE BY COMMON DIMMER, according to claim 1, **characterized in that** the control gear (5) is provided with a part (5a) intended for controlling the fluorescent tube (6) and another part (5b) with mains output or low voltage transformer for dimmable lamps.

3. COMPACT FLUORESCENT LAMP WITH LIGHT OUTPUT DIMMABLE BY COMMON DIMMER, according to claims 1 and 2, **characterized in that** the second incandescent lamp (3) is disposed in the center of the base (4) between the tube (6) of the compact fluorescent lamp (2); and **in that** said tube might have a spiral or straight configuration.

4. COMPACT FLUORESCENT LAMP WITH LIGHT OUTPUT DIMMABLE BY COMMON DIMMER, according to claims 1 and 2, **characterized in that** the second incandescent lamp (3) is disposed laterally to the base (4) and externally to the tube (6) of the compact fluorescent lamp (2), in which case said tube (6) might present any configuration.

5. COMPACT FLUORESCENT LAMP WITH LIGHT OUTPUT DIMMABLE BY COMMON DIMMER, according to claims 1 and 2, **characterized in that** the second incandescent lamp (3) is replaceable once the incandescent lamp is burned-out.

## Amended claims

### Amended claims in accordance with Rule 137(2) EPC.

**1.** COMPACT FLUORESCENT LAMP WITH LIGHT OUTPUT DIMMABLE BY COMMON DIMMER, of the type comprising a compact fluorescent lamp (2) itself non dimmable (self ballasted or remote ballasted) and a second incandescent lamp (3), being both lamps (2, 3) coupled to a single base (4) of conventional type, threaded (4a) or not (4b), so that they form one combined unit with power connection by said base (4), **characterized by** the fact of comprising inside of it a control gear (5) suitable for supplying power to the fluorescent tube (6) of said compact fluorescent lamp (2) and, at the same time, detecting the control of a common or conventional tungsten dimmer which is incorporated to the installation.

**2.** COMPACT FLUORESCENT LAMP WITH LIGHT OUTPUT DIMMABLE BY COMMON DIMMER, according to claim 1, **characterized in that** the control gear (5) is provided with a part (5a) intended for controlling the fluorescent tube (6) and another part (5b) with mains output or low voltage transformer for dimmable lamps.

**3.** COMPACT FLUORESCENT LAMP WITH LIGHT OUTPUT DIMMABLE BY COMMON DIMMER, according to claims 1 and 2, **characterized in that** the second incandescent lamp (3) is disposed in the center of the base (4) between the tube (6) of the compact fluorescent lamp (2); and **in that** said tube might have a spiral or straight configuration.

**4.** COMPACT FLUORESCENT LAMP WITH LIGHT OUTPUT DIMMABLE BY COMMON DIMMER, according to claims 1 and 2, **characterized in that** the second incandescent lamp (3) is disposed laterally to the base (4) and externally to the tube (6) of the compact fluorescent lamp (2), in which case said tube (6) might present any configuration.

**5.** COMPACT FLUORESCENT LAMP WITH LIGHT OUTPUT DIMMABLE BY COMMON DIMMER, according to claims 1 and 2, **characterized in that** the second incandescent lamp (3) is replaceable once the incandescent lamp is burned-out.
